# EUROPEAN PATENT APPLICATION

(11) **EP 3 978 969 A1**
(43) Date of publication of application: **06.04.2022**
(21) Application number: 20923680.1
(22) Date of filing: 29.10.2020
(51) Int. Cl.: G02B 6/036, C03C 25/50, C03B 37/027, C03B 37/018

(54) **OPTICAL FIBER, AND PREPARATION METHOD FOR OPTICAL FIBER**

(30) Priority: 18.08.2020 CN 202010830293
(71) Applicant: Zhongtian Technology Fiber Potics Co., Ltd, Economic Development Zone Nantong City Jiangsu 226000 (CN); Jiangsu Zhongtian Technology Co., Ltd., Nantong, Jiangsu 226463 (CN); Jiangdong Science and Technology Co., Ltd, Rudong County Economic Development Zone Nantong Jiangsu 226400 (CN)
(72) Inventor: YOU, Guanglei, Nantong, Jiangsu 226000 (CN); CAO, Shanshan, Nantong City, Jiangsu 226000 (CN); ZHU, Qiansheng, Nantong, Jiangsu 226000 (CN); XU, Haitao, Nantong City, Jiangsu 226000 (CN); SU, Haiyan, Nantong City, Jiangsu 226000 (CN); LIU, Zhizhong, Nantong City, Jiangsu 226000 (CN); XUE, Chi, Nantong, Jiangsu 226463 (CN); XUE, Jiping, Nantong, Jiangsu 226463 (CN)
(74) Representative: Zaboliene, Reda
(86) International application number: PCT/CN2020/124907
(87) International publication number: WO 2022/036861

(57) **Abstract**

An optical fiber with reduced signal losses when flexed includes a core layer, a cladding layer wrapping the core layer, and a coating layer. The cladding layer includes an inner cladding layer, a first depressed layer, a second depressed layer, and an outer cladding layer that are sequentially wrapped inside to outside. A single side width of the first depressed layer is greater than a single side width of the second depressed layer, a relative refractive index of the first depressed layer is from -0.03% to -0.06%, and a relative refractive index of the second depressed layer is from -0.08% to -0.15%. First and second coating layers are applied on the outer cladding layer, a diameter of the second coating layer is 175µm~195µm. A method for preparing such optical fiber is also disclosed.

## Description

### FIELD

The subject matter herein generally relates to optical communication technology, especially to an optical fiber and method for preparing an optical fiber.

### BACKGROUND

At present, optical fiber cable manufacturers are still in experimental and exploratory stage in the field of small-size optical fibers. The minimum size of single-mode optical fibers on the market is 200µm, an outer diameter of a cladding layer covering the optical fiber is 125µm, and an outer diameter of a coating on the cladding layer diameter is 250µm. The optical fiber is thus protected by both of an inner coating layer of and an outer coating layer. There is prior art about designing a small-sized bend-tolerant optical fiber suitable for ultra-high-density optical cables to meet use requirements.

With the increase of optical network construction and the limitation of pipeline resources, the difficulty of laying optical fibers has increased, and the optical fiber often encounters small bends during the laying process. Due to low bend-tolerant and relatively large size of the optical fibers, bending readily causes signal loss and transmission interruption.

### SUMMARY

In view of the above, it is necessary to provide an optical fiber and method for making an optical fiber that reduces the size of the optical fiber and improves the bend-tolerant of the optical fiber.

The present disclosure provides an optical fiber, the optical fiber includes: a core layer, a cladding layer wrapping the core layer, and a coating layer. The cladding layer includes an inner cladding layer, a first depressed layer, a second depressed layer, and an outer cladding layer, sequentially wrapped from the inside to the outside. A single side width of the first depressed layer is greater than a single side width of the second depressed layer, a relative refractive index of the first depressed layer is from -0.03% to -0.06%, and a relative refractive index of the second depressed layer is from -0.08% to -0.15%. The coating layer includes a first coating layer and a second coating layer that are coated on the outer cladding layer from the inside to the outside, a diameter of the second coating layer is 175µm∼195µm.

Preferably, the first depressed layer and the second depressed layer are both fluorine-doped layers, the single side width of the first depressed layer is 3~5µm, and the single side width of the second depressed layer is 2∼4µm.

Preferably, the refractive index of the second depressed layer is a parabolic distribution within the gradient, decreasing from the first depressed layer to the outer cladding layer, and the distribution index is 1.2-2.2.

Preferably, a diameter of the outer layer is 124µm∼126µm.

Preferably, an elastic modulus of the first coating layer is 0.3∼0.4Mpa, a thickness of the first coating layer is 12µm~20µm, and a glass transition temperature of the first coating layer is -40°C~-60 °C.

Preferably, a Young's modulus of the second coating layer is greater than 600Mpa, and a thickness of the second coating layer is 12µm to 18µm.

Preferably, a mode field diameter of the optical fiber is 8.4µm~9.4µm.

Preferably, when a bending radius of the optical fiber is 7.5mm, a bending loss of the optical fiber at a wavelength of 1550nm is less than 0.1dB in macroscopic terms, in the state of bending one full turn, the macro bending loss of the optical fiber at a wavelength of 1625nm is less than 0.25dB.

A method for preparing an optical fiber includes:
preparing a first core rod loose body, using a first torch, a second torch, and a third torch to sequentially deposit the first core rod loose body from the inside to the outside; SiCl4 gas, GeCl4 gas, oxygen, combustible gas, and argon are introduced into the first torch to form a germanium-doped core layer; SiCl4 gas, oxygen, combustible gas, and argon gas are introduced into the second torch to form the inner cladding layer of pure siliconSiCl4 gas; fluorine-containing gas, oxygen, combustible gas, and argon gas are introduced into the third torch to form the first depression layer;
placing the of the first core rod loose body in chlorine gas for dehydroxylation treatment, and then performing a vitrification process and an annealing process to form a core rod;
using the core rod as a target rod, depositing a second depressed layer and an outer coating on the outer surface of the core rod from the inside to the outside to produce a second core rod loose body, and sintering the second core rod loose body to obtain an optical fiber preform;
the optical fiber is subjected to a wire drawing process, and processed through a secondary heating heat preservation annealing process to obtain a bare optical fiber;
cooling the bare optical fiber, and applying primary coating and secondary coating on the bare optical fiber to obtain a first coating layer and a second coating layer, and applying ultraviolet light to the first coating layer and the second coating layer to cure, this obtains an optical fiber.

Preferably, in the secondary heating and heat preservation annealing process, the sectioned heating resistance wire in the resistance furnace is controlled to form a gradient temperature field that gradually decreases from 1250°C to 800°C.

The optical fiber and method for preparing an optical fiber provided in the embodiments of this disclosure reduce the diameter of the coating under the condition that the diameter of the cladding remains unchanged, thereby reducing the size of the optical fiber underneath the cladding. In addition, the optical fiber mentioned in this disclosure adopts a double-depressed and hierarchically depressed structure with the first depressed layer and the second depressed layer in the design of the cladding refractive index, which limits leakage of light signals under a state of being bent and improves the signal-carrying ability of the optical fiber when bent.

### BRIEF DESCRIPTION OF THE DRAWINGS

Implementations of the present technology will now be described, by way of example only, with reference to the attached figures.
Fig. 1 is a schematic cross-sectional view of an optical fiber in an embodiment.
Fig. 2 is a schematic view illustrating refractive index of the optical fiber in fig. 1.
Fig. 3 is a flow chart of method for preparing an optical fiber according to an embodiment.

### BRIEF DESCRIPTION OF COMPONENTS

| | |
|---|---|
| optical fiber | 100 |
| core layer | 10 |
| cladding layer | 20 |
| inner cladding layer | 21 |
| first depressed layer | 22 |
| second depressed layer | 23 |
| outer cladding layer | 24 |
| coating layer | 30 |
| first coating layer | 31 |
| second coating layer | 32 |

### DETAILED DESCRIPTION

It will be appreciated that for simplicity and clarity of illustration, where appropriate, reference numerals have been repeated among the different figures to indicate corresponding or analogous elements. In addition, numerous specific details are set forth in order to provide a thorough understanding of the exemplary embodiments described herein. However, it will be understood by those of ordinary skill in the art that the exemplary embodiments described herein can be practiced without these specific details. In other instances, methods, procedures, and components have not been described in detail so as not to obscure the related relevant feature being described. The drawings are not necessarily to scale and the proportions of certain parts may be exaggerated to better illustrate details and features. The description is not to be considered as limiting the scope of the exemplary embodiments described herein.

Several definitions that apply throughout this disclosure will now be presented.

The term "substantially" is defined to be essentially conforming to the particular dimension, shape, or other feature that the term modifies, such that the component need not be exact. For example, "substantially cylindrical" means that the object resembles a cylinder, but can have one or more deviations from a true cylinder. The term "comprising" means "including, but not necessarily limited to"; it specifically indicates open-ended inclusion or membership in a so-described combination, group, series, and the like.

The definitions and descriptions of some terms involved in the present disclosure are as follows.

The stepped distribution is the distribution pattern of the refractive indexes of the optical fiber. The refractive index of the core layer and of the cladding layer are uniformly distributed, and there is a refractive index difference between them. The refractive index of the core layer is greater than the refractive index of the cladding layer. There is a step between the cladding layer and the core layer, so it is called a stepped distribution.

Optical cable cut-off wavelength λcc: according to IEC standard 60793-1-44, it is defined as the wavelength at which an optical signal no longer propagates as a single-mode signal after 22 meters in an optical fiber. In a test, it is necessary to test the optical fiber by winding fiber in a circle with a radius of 14cm and two circles with a radius of 4cm.

Mode Field Diameter (MFD) is used to characterize the distribution of fundamental mode light in the core region of a single-mode fiber. The fundamental mode has the greatest light intensity at the axis of the core area, gradually weakening as the distance from the axis increases.

Elastic Modulus is generally defined as: the stress in a unidirectional stress state divided by the strain in that direction. In the stage of elastic deformation of the material, its stress and strain become directly proportional (that is, in accordance with Hooke's law), and its proportional coefficient becomes the elastic modulus.

Young's modulus is a physical quantity used to characterize the ability of a solid material to resist deformation. It measures the stiffness of an isotropic elastomer. Young's modulus is a common indicator of elastic modulus.

The wet-to-dry coating method means that the coating of the bare optical fiber is actually by two coating molds, and the inner layer is first coated on the surface of the bare fiber, and then the outer layer is coated. The wet-to-wet coating method means that the coating of layers on the bare optical fiber can be applied by a coating mold at the same time.

VAD (Vacuum Arc Degassing) refers to the vapor phase axial deposition method; OVD (Outside Vapour Deposition) refers to the external vapor deposition method.

The glass transition temperature (Tg) refers to the temperature corresponding to the transition from the glass state to the high elastic state. The glass transition is an inherent property of amorphous polymer materials, and it is a macroscopic manifestation of the transformation of polymer motion. The glass transition temperature is the lowest temperature at which the molecular chains can move, the glass transition temperature is directly related to the flexibility of the molecular chain. The greater the flexibility of the molecular chain, the lower the glass transition temperature; the greater the rigidity of the molecular chain, the higher the glass transition temperature will be.

The embodiment of the present disclosure provides an optical fiber, including a core layer and a cladding layer surrounding the core layer. The cladding layer includes an inner cladding layer, a first depressed layer, a second depressed layer, and an outer cladding layer provided as coatings. A single-sided width of the depressed layer is greater than a single-sided width of the second depressed layer. The relative refractive index of the first depressed layer is -0.03% to -0.06%. The relative refractive index of the second depressed layer is- 0.08%∼-0.15%. The outer cladding layer further includes a coating layer. The coating layer includes a first coating layer and a second coating layer, and the diameter of the second coating layer is 175µm~195µm.

The optical fiber and optical fiber preparation method provided in the present disclosure reduce the diameter of the coating layer under the condition that the diameter of the cladding remains unchanged, thereby reducing the size of the optical fiber. In addition, the optical fiber in this disclosure adopts the structure of double-layer depression and hierarchical depression in the design of the cladding layer refractive index, which limits the leakage of light signals in a bent-fiber state of the optical fiber. Some embodiments of the present disclosure are described below in detail with reference to the accompanying drawings.

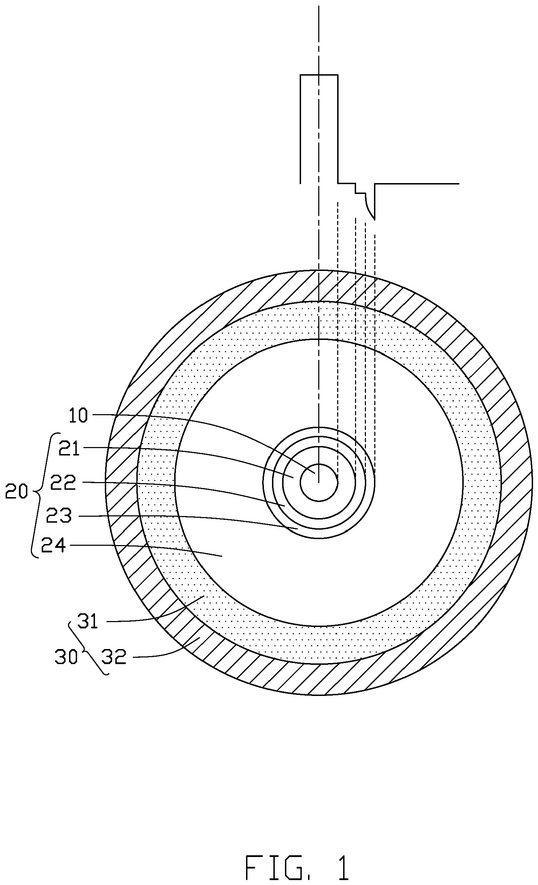

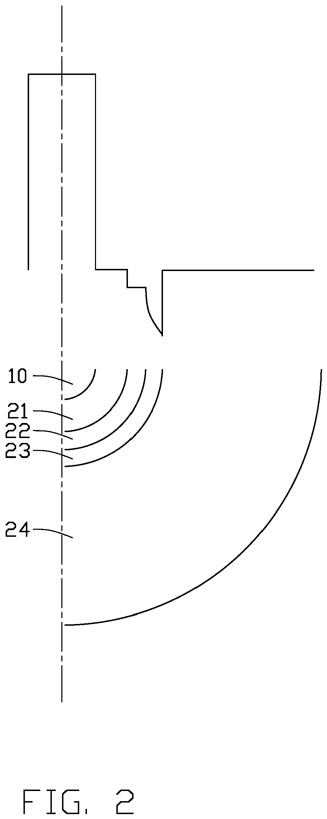

Referring to fig. 1 and fig. 2, the optical fiber 100 provided by the embodiment of the present disclosure includes a core layer 10, a cladding layer 20, and a coating layer 30 that are sequentially wrapped and arranged from the inside to the outside. In one embodiment, the optical fiber 100 is a single-mode optical fiber. The refractive index distribution between the core layer 10 and the cladding layer 20 is a stepped distribution. The refractive index profile of the optical fiber 100 adopts a stepped double recessed structure inside the cladding layer 20.

The core layer 10 is doped with germanium to increase its refractive index. The refractive index of the core layer 10 relative to the pure silicon core is 0.35% to 0.50%. In one embodiment, the relative refractive index of the core layer 10 is one of 0.35%, 0.38%, 0.40%, 0.42%, 0.44%, 0.46%, 0.48%, or 0.50%. The diameter of the core layer 10 is 8.4µm to 9.4µm. In one embodiment, the diameter of the core layer 10 is one of 8.4µm, 8.6µm, 8.8µm, 9.0µm, 9.2µm, or 9.4µm.

The cladding layer 20 wraps the outside of the core layer 10, and the cladding layer 20 includes an inner cladding layer 21, a first depressed layer 22, a second depressed layer 23, and an outer cladding layer 24 that are sequentially wrapped from the inside to the outside.

The inner cladding layer 21 is pure silicon. The refractive index distributions of the inner cladding layer 21 and the core layer 10 are in a stepped distribution, and the refractive index of the inner cladding layer 21 relative to the pure silicon core is 0% to 0.02%. In one embodiment, the refractive index of the inner cladding layer 21 relative to the pure silicon core is one of 0%, 0.005%, 0.01%, 0.015%, 0.02%. The single side width of the inner cladding layer 21 is 4 to 7.5µm. In an embodiment, the single side width of the inner cladding layer 21 is one of 4µm, 4.5µm, 5.0µm, 5.5µm, 6.0µm, 6.5µm, 7.0µm, or 7.5µm.

The first depressed layer 22 is a fluorine-doped layer. The refractive index of the optical fiber 100 is reduced by the fluorine-doping. The refractive index of the relatively pure silicon core of the first depressed layer 22 is -0.03% to -0.06%. In one embodiment, the relative refractive index of the first depressed layer 22 is one of -0.03%, -0.04%, -0.05%, and -0.06%. The single side width of the first depressed layer 22 is greater than the single side width of the second depressed layer 23. The single side width of the first depressed layer 22 is 3^{~}5µm. In one embodiment, the single side width of the first depressed layer 22 is one of 3.5µm, 4.0µm, 4.5µm, or 5µm.

The second depressed layer 23 is a fluorine-doped layer, which further reduces the refractive index of the optical fiber 100 through a deep doping process, preventing optical signal leakage when in an extremely bent state, and reducing any loss when the optical fiber 100 is bent. The relative refractive index of the second depressed layer 23 is in a gradient inner parabolic distribution, and the distribution index α is between 1.2 and 2.2. The relative refractive index of the second depressed layer 23 is gradually lowered from the first depressed layer 22 to the outer envelope layer 24. The relative refractive index of the second depressed layer 23 is -0.08% to -0.15%. In one embodiment, the relative refractive index of the second depressed layer 23 is one of -0.08%, -0.06%, -0.04%, -0.02%, 0%, 0.02%, 0.04%, 0.06%, 0.08%, 0.10 %, 0.12%, 0.15%. The width of one side of the second depressed layer 23 is 2 to 4µm. In an embodiment, the single side width of the second depression layer 23 is one of 25µm, 3.0µm, 3.5µm, 4µm.

The outer cladding layer 24 is pure silicon, and the outer cladding layer 24 has a diameter of 124µm to 126µm. In one embodiment, the diameter of the outer cladding layer 24 is one of 124µm, 124.5µm, 125µm, 125.5µm, and 126µm.

The coating layer 30 includes a first coating layer 31 and a second coating layer 32 that are disposed on the outer cladding layer 24 from the inside to the outside.

The first coating layer 31 is violet coating resin, and the thickness of the first coating layer 31 is 12 µm-20µm. In an embodiment, the thickness of the first coating layer 31 is one of 12µm, 13µm, 14µm, 15µm, 16µm, 17µm, 18µm, 19µm, and 20µm. The elastic modulus of the first coating layer 31 is 0.3-0.4Mpa. In one embodiment, the elastic modulus of the first coating layer 31 is one of 0.3Mpa, 0.32Mpa, 0.34Mpa, 0.36Mpa, 0.38Mpa, and 0.4Mpa.

The second coating layer 32 is violet coating resin, and the thickness of the second coating layer 32 is 12 µm-18µm. In an embodiment, the thickness of the second coating layer 32 is one of 12µm, 13µm, 14µm, 15µm, 16µm, 17µm, 18µm, and the diameter of the second coating layer 32 is 175 µm^{~}195µm. In one embodiment, the diameter of the second coating layer 32 is one of 175µm, 180µm, 185µm, 190µm, and 195µm. The Young's modulus of the second coating layer 32 is greater than 600Mpa, which improves the mechanical strength of the optical fiber 100. In this disclosure, by setting the modulus of the first coating layer 31 lower than the modulus of the second coating layer 32, the signal losses of the optical fiber during bending are reduced. In addition, in the present disclosure, the diameter of the coating layer 30 is reduced although the diameter of the cladding layer 20 is unchanged, so that the size of the optical fiber 100 is greatly reduced. The core density of the optical fiber per unit cross-sectional area is increased by 190%, and the outer diameter of the optical cable is reduced by 50%.

The optical fiber 100 provided in this disclosure can be used to manufacture ultra-fine air-blown micro-cables and ultra-density optical cables, for market demands such as FITH (Fiber to the home), 5G densely distributed construction, data centers, and so on.

When the cut-off wavelength of the optical fiber 100 is below 1260 nm, it is suitable for all-wavelength optical communications from the O-band to the L-band.

The mode field diameter of the optical fiber 100 is 8.4µm to 9.4µm. In an embodiment, the mode field diameter of the optical fiber 100 is one of 8.4µm, 8.6µm, 8.8µm, 9.0µm, 9.2µm, and 9.4µm. The zero-dispersion wavelength of the optical fiber 100 is 1300 to 1324nm. In an embodiment, the zero-dispersion wavelength of the optical fiber 100 is one of 1300nm, 130 nm, 1310nm, 1315nm, 1320nm, and 1324nm. The mode field diameter of the above-mentioned optical fiber 100 provided in the present disclosure meets the mode field diameter standard of a single-mode optical fiber, and therefore is compatible with conventional single-mode optical fibers (for example, G.652 optical fibers and G.657 optical fibers).

The optical fiber 100 has low macro signal losses when bent. For example, when the bending radius of the optical fiber 100 is 7.5 mm, the macro bending loss of the optical fiber 100 at a wavelength of 1550 nm is less than 0.1 dB in the state of one full turn, and the macro bending loss of the optical fiber 100 at a wavelength of 1625 nm is less than 0.25dB.

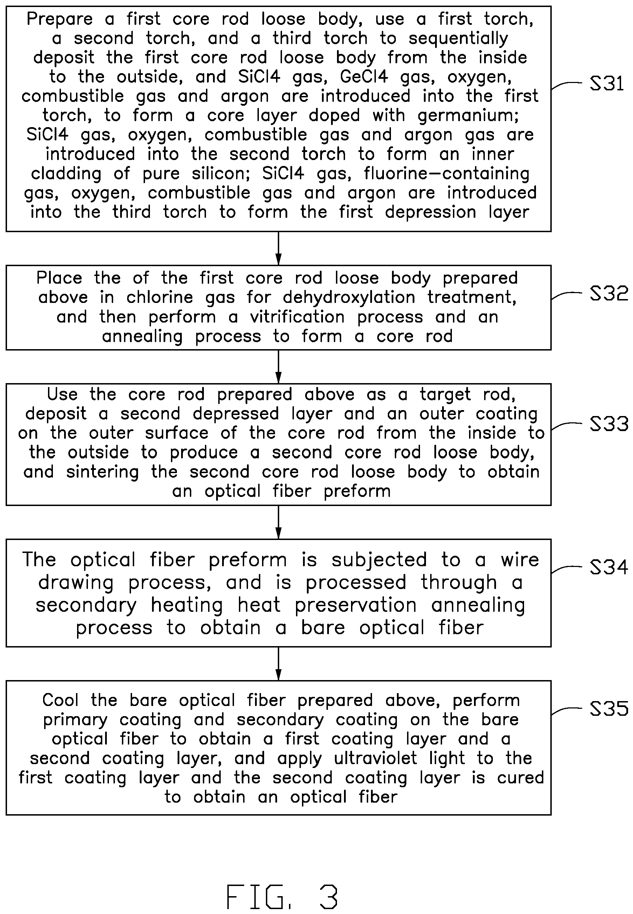

Referring to fig. 3, fig. 3 is a flowchart of method for preparing an optical fiber provided by an embodiment of the present disclosure. The optical fiber preparation method is designed according to the refractive index structure of the optical fiber 100 and is used to prepare the optical fiber 100. Specifically, the method for preparing an optical fiber includes the following steps.

S31, prepare a first core rod loose body, use a first torch, a second torch, and a third torch to sequentially deposit the first core rod loose body from the inside to the outside, and SiCl4 gas, GeCl4 gas, oxygen, combustible gas and argon are introduced into the first torch, to form a core layer doped with germanium; SiCl4 gas, oxygen, combustible gas and argon gas are introduced into the second torch to form an inner cladding of pure silicon; SiCl4 gas, fluorine-containing gas, oxygen, combustible gas and argon are introduced into the third torch to form the first depression layer.

The core layer, the inner cladding layer and the first depression layer are obtained by continuous deposition processing using a VAD (Vacuum Arc Degassing) process.

Preferably, during the process of preparing the core layer, SiCl4 gas and GeCl4 gas are passed into the first torch through argon gas as a transport carrier. In one embodiment, the gas flow rate of GeCl4 gas may be 200ml/min; correspondingly, the gas flow rate of argon may be 200ml/min; the combustible gas may be hydrogen, and the gas flow rate of hydrogen may be 4ml/min; the gas flow rate of oxygen can be 35ml/min; the gas flow rate of SiCl4 gas can be 5ml/min, and correspondingly, the gas flow rate of argon is 150ml/min; the flame temperature of the first torch can be 725°C. The diameter of the prepared core layer is 8.4µm~9.4µm, and the relative refractive index of the core layer is 0.35%~0.50%.

In the process of preparing the inner cladding layer, SiCl4 gas is passed into the second torch through argon gas as a transport carrier. In one embodiment, the combustible gas may be hydrogen. The gas flow rates of hydrogen and oxygen are respectively 6ml/min and 60ml/min; the gas flow rate of SiCl4 gas is 15ml/min, correspondingly, the gas flow rate of argon is 150ml/min, and the flame temperature of the second torch is 1200°C. The single side width of the inner cladding layer is 4~7.5µm, and the refractive index relative to the pure silicon core is 0%~0.02%.

In the process of preparing the first depression layer, the fluorine-containing gas may be CF4 gas, and the combustible gas may be hydrogen. The gas flow rate of SiCl4 gas is 15-20ml/min. In an embodiment, the gas flow rate of SiCl4 gas is one of 15ml/min, 16ml/min, 17ml/min, 18ml/min, 19ml/min, 20ml/min. Correspondingly, the gas flow rate of argon can be 150ml/min. The gas flow rate of fluorine-containing gas is 300~400ml/min. In an embodiment, the gas flow rate of the fluorine-containing gas is one of 300ml/min, 320ml/min, 340ml/min, 360ml/min, 380ml/min, 400ml/min. Correspondingly, the gas flow rate of argon can be 200ml/min. The gas flow rates of oxygen and combustible gas are respectively 35ml/min and 4ml/min. The flame temperature in the third torch is 900-1100°C. In one embodiment, the flame temperature of the third torch is one of 900°C, 950°C, 1000°C, 1050°C, 1100°C. The single side width of the prepared first depressed layer is 3 to 5µm, and the refractive index relative of the first depressed layer to the pure silicon core is -0.03% to -0.06%.

S32, place the of the first core rod loose body prepared above in chlorine gas for dehydroxylation treatment, and then perform a vitrification process and an annealing process to form a core rod.

Preferably, the temperature in the dehydroxylation treatment is controlled at 1200~1250°C. The annealing process includes annealing at 1000°C to 1150°C for 2 to 4 hours to eliminate residual stress.

S33, use the core rod prepared above as a target rod, deposit a second depressed layer and an outer coating on the outer surface of the core rod from the inside to the outside to produce a second core rod loose body, and sintering the second core rod loose body to obtain an optical fiber preform.

Preferably, the second depressed layer and the outer cladding layer are deposited from the inside to the outside on the outer surface of the core rod by the OVD process to produce the second core rod loose body, and the second core rod loose body is sintered to obtain the optical fiber preform.

During the process of the second depressed layer, the fluorine-containing gas CF4 is passed into the fourth torch, and the gas flow rate of the CF4 gas is 850~1000ml/min. In one embodiment, the gas flow rate of the CF4 gas is one of 850ml/min, 860ml/min, 870ml/min, 880ml/min, 890ml/min, 900ml/min, 910ml/min, 920 One of ml/min, 930ml/min, 940ml/min, 950ml/min, 960ml/min, 970ml/min, 980ml/min, 990ml/min, 1000ml/min. The flame temperature of the fourth torch is 1000-1100 °C. In one embodiment, the flame temperature of the fourth torch is one of 1000°C, 1020°C, 1040°C, 1060°C, 1080°C, 1100°C. The single side width of the second depressed layer is 2 to 4µm, and the relative refractive index of the second depressed layer is -0.08% to -0.15%.

S34, the optical fiber preform is subjected to a wire drawing process, and is processed through a secondary heating heat preservation annealing process to obtain a bare optical fiber.

The optical fiber preform enters the drawing furnace from the top of the drawing furnace for melting and drawing processing to obtain a bare optical fiber. Preferably, according to different diameters of the optical fiber preform, different drawing temperatures and drawing speeds can be set. In one embodiment, the wire drawing temperature includes 1950-2150° C, the wire drawing speed is 500 to 2500 m/min, and the wire drawing tension is 50 g to 200 g.

In at least one embodiment of the present disclosure, the optical fiber preform enters the resistance furnace after the drawing processing is completed, and the optical fiber preform is subjected to secondary heating and heat preservation annealing through the resistance furnace, and strong infrared heat radiation is generated through the uniform heat radiation of resistance heating, to achieve the purpose of secondary heating and annealing.

The resistance furnace is provided with an infrared monitoring device. The infrared monitoring device communicates with a control terminal. The infrared monitoring device is used to transmit monitored infrared output power to the control terminal. The control terminal controls the temperature in the resistance furnace to ensure that the surface temperature of the optical fiber forms a gradient temperature field that gradually decreases from 1250°C to 800°C. For example, a sectioned heating resistance wire is provided in the resistance furnace, and the heating resistance wire can be set in sections according to the range of the gradient temperature field. In an embodiment, the heating resistance wire can be a silicon carbon resistance wire. For example, for the gradient temperature field of 1250°C to 800°C mentioned in this disclosure, the heating resistance wire can be divided into four sections, and each section of the heating resistance wire corresponds to a different temperature range. The four sections of heating resistance wires are independently controlled by the control terminal, and a gradient temperature field of 1250°C to 800°C can be realized in the resistance furnace. The length of the heat preservation annealing zone is 2~3m, so that the temperature fluctuation of the fiber surface is within ± 10°C, the internal stress is fully released in the gradient annealing temperature range, and the Rayleigh heat dissipation caused by uneven density distribution is reduced.

S35, cool the bare optical fiber prepared above, perform primary coating and secondary coating on the bare optical fiber to obtain a first coating layer and a second coating layer, and apply ultraviolet light to the first coating layer and the second coating layer is cured to obtain an optical fiber.

In at least one embodiment of the present disclosure, the cooled and annealed optical fiber is coated through a coating mold. The primary coating and the secondary coating can be separately wet and dry coated by two coating molds. For example, the bare optical fiber is coated by a first coating mold to obtain a first coating layer. Next, the first coating layer is coated by a second coating mold to obtain a second coating layer. In other embodiments, the primary coating and the secondary coating can be wet-on-wet coating simultaneously through a coating mold. For example, the surface of the bare optical fiber can be coated simultaneously once through a third coating mold to obtain a first coating layer and a second coating layer. The thickness of the first coating layer is 12 µm to 20 µm. The elastic modulus of the first coating layer is 0.3 to 0.4Mpa. The glass transition temperature of the first coating layer is -60° C to -40 °C. The optical fiber in the disclosure can work at low temperature. The glass transition temperature of the first coating layer is relatively low, ranging from -40°C to -60°C, that is, the flexibility of the first coating layer is relatively large, so as to ensure that the optical fiber 100 does not become brittle and can operates normally at low temperatures. The thickness of the second coating layer is 12 µm to 18 µm, and the diameter of the second coating layer is 175 µm to 195 µm. The Young's modulus of the second coating layer is greater than 600Mpa, which ensures the mechanical strength of the optical fiber 100.

The coating mold is filled with acrylic resin paint. The coating mold includes a guide die hole and an exit die hole. The size of the exit die hole of the coating mold is designed, and the gap between the exit die hole and the bare optical fiber is kept at 15-20µm. An internal centering pressure is formed between the guide die hole and the exit die hole to ensure that the bare fiber is in the center of the coating mold, prevent the bare fiber from rubbing to the edge of the coating mold and cause micro-cracks in the fiber, and reduce the strength of the fiber during stretching.

The resin coating of the bare optical fiber needs to be cured by ultraviolet light. In the ultraviolet curing process, a UV (Ultra-Violet Ray) light source is used. The input power of the ultraviolet light source is 2KW~7KW, and the radiation energy of the light source is 18- 25W/cm2, 90% of the radiation wavelength of the light source is concentrated in the range of 365nm~405nm. In addition, the input power of the ultraviolet light source can be automatically adjusted steplessly from 0% to 100% according to the drawing speed. The input power of the ultraviolet light source is proportional to the drawing speed. The higher the drawing speed, the higher the drawing speed and the greater the input power. The power of primary curing (corresponding to first coating) is controlled at 300W~1500W, and the power of secondary curing (corresponding to second coating) is controlled at 500W~6000W. Through the above parameter setting of the ultraviolet curing process, the utilization efficiency of ultraviolet light can be improved, the ultraviolet light source can be effectively radiated on the surface of the optical fiber 100, and the energy consumption of ultraviolet light can be reduced. In addition, the ultraviolet curing process provided in this disclosure ensures that the curing degree of the two coating layers of the optical fiber 100 is at the level of 90% to 95%, so that the coating resin is fully cured, and at the same time, the additional attenuation of the optical fiber caused by over-curing is avoided.

After the coating is cured, the optical fiber 100 is taken up into a coil through a pulling device. During the take-up process, adjusting the take-up tension of the optical fiber to 40g~65g can reduce the external stress when the optical fiber 100 is superimposed, reduce the additional loss caused by the microbending of the optical fiber 100, and keep the attenuation of the optical fiber 100 at a low level. In one embodiment, a fixed tension is applied to the take-up end of the optical fiber, and the fixed tension can be 40g, 45g, 50g, 55g, 60g, and 65g. In other embodiments, at the take-up end of the optical fiber, the optimal tension is applied according to the number of bending turns and the bending radius of the optical fiber, so as to minimize the external stress when the optical fiber is superimposed. The mapping relationship between the optimal tension and the number of bending turns and the bending radius is preset.

The embodiments shown and described above are only examples. Even though numerous characteristics and advantages of the present technology have been set forth in the foregoing description, together with details of the structure and function of the present disclosure, the disclosure is illustrative only, and changes can be made in the details, including matters of shape, size, and arrangement of the parts within the principles of the present disclosure, up to and including the full extent established by the broad general meaning of the terms used in the claims.

## Claims

1. An optical fiber comprising:
a core layer;
a cladding layer wrapping the core layer, wherein the cladding layer comprises an inner cladding layer, a first depressed layer, a second depressed layer, and an outer cladding layer that are sequentially wrapped from the inside to the outside, a single side width of the first depressed layer is greater than a single side width of the second depressed layer, a relative refractive index of the first depressed layer is from -0.03% to -0.06%, and a relative refractive index of the second depressed layer is from -0.08% to -0.15%; and
a coating layer comparing a first coating layer and a second coating layer that are coated on the outer cladding layer from the inside to the outside, a diameter of the second coating layer is 175µm~195µm.

2. The optical fiber of claim 1, wherein the first depressed layer and the second depressed layer are both fluorine-doped layers, the single side width of the first depressed layer is 3~5µm, and the single side width of the second depressed layer is 2~4µm.

3. The optical fiber of claim 1, wherein the refractive index of the second depressed layer is a parabolic distribution within the gradient, decreasing from the first depressed layer to the outer cladding layer, and the distribution index is 1.2-2.2.

4. The optical fiber of claim 1, wherein a diameter of the outer layer is 124µm~126µm.

5. The optical fiber of claim 1, wherein an elastic modulus of the first coating layer is 0.3~0.4Mpa, a thickness of the first coating layer is 12µm~20µm, and a glass transition temperature of the first coating layer is -40°C~-60 °C.

6. The optical fiber of claim 1, wherein a Young's modulus of the second coating layer is greater than 600Mpa, and a thickness of the second coating layer is 12µm to 18µm.

7. The optical fiber of claim 1, wherein a mode field diameter of the optical fiber is 8.4µm~9.4µm.

8. The optical fiber of claim 1, wherein when a bending radius of the optical fiber is 7.5mm, a macro bending loss of the optical fiber at a wavelength of 1550nm is less than 0.1dB in the state of bending one turn, the macro bending loss of the optical fiber at a wavelength of 1625nm is less than 0.25dB.

9. A method for preparing an optical fiber, comprising:
preparing a first core rod loose body, using a first torch, a second torch, and a third torch to sequentially deposit the first core rod loose body from the inside to the outside; SiCl4 gas, GeCl4 gas, oxygen, combustible gas, and argon are introduced into the first torch to form a germanium-doped core layer; SiCl4 gas, oxygen, combustible gas and argon gas are introduced into the second torch to form the inner cladding layer of pure siliconSiCl4 gas; fluorine-containing gas, oxygen, combustible gas and argon gas are introduced into the third torch to form the first depression layer;
placing the of the first core rod loose body in chlorine gas for dehydroxylation treatment, and then performing a vitrification process and an annealing process to form a core rod;
using the core rod as a target rod, depositing a second depressed layer and an outer coating on the outer surface of the core rod from the inside to the outside to produce a second core rod loose body, and sintering the second core rod loose body to obtain an optical fiber preform;
the optical fiber being subjected to a wire drawing process, and being processed through a secondary heating heat preservation annealing process to obtain a bare optical fiber;
cooling the bare optical fiber, and performing primary coating and secondary coating on the bare optical fiber to obtain a first coating layer and a second coating layer, and applying ultraviolet light to the first coating layer and the second coating layer is cured to obtain an optical fiber.
secondary heating heat preservation annealing process

10. The method for preparing an optical fiber of claim 9, wherein in the secondary heating and heat preservation annealing process, the sectioned heating resistance wire in the resistance furnace is controlled to forms a gradient temperature field that gradually decreases from 1250°C to 800°C.
